Europäisches Patentamt

European Patent Office

Office européen des brevets

(11) Publication number: **0 433 860 B1**

# EUROPEAN PATENT SPECIFICATION

(45) Date of publication of patent specification: **02.11.94**  (51) Int. Cl.[5]: **C22B 60/02**

(21) Application number: **90123884.0**

(22) Date of filing: **12.12.90**

(54) **Waterglass precipitate recovery process.**

(30) Priority: **20.12.89 US 453744**

(43) Date of publication of application:
**26.06.91 Bulletin 91/26**

(45) Publication of the grant of the patent:
**02.11.94 Bulletin 94/44**

(84) Designated Contracting States:
**BE ES FR GB IT SE**

(56) References cited:
**EP-A- 0 066 988**
**US-A- 4 349 513**

(73) Proprietor: **WESTINGHOUSE ELECTRIC COR-
PORATION**
**Westinghouse Building**
**Gateway Center**
**Pittsburgh Pennsylvania 15222 (US)**

(72) Inventor: **Lahoda, Edward Jean**
**116 Washington Street**
**Pittsburgh, Pennsylvania 15218 (US)**
Inventor: **Parks, Beryl Hugh**
**129 Duchess Trail**
**Lexington, South Carolina 29072 (US)**

(74) Representative: **Gallo, Wolfgang, Dipl.-Ing.
(FH) et al**
**Patentanwälte Dipl.-Ing. L. Fleuchaus**
**Dipl.-Phys. H. Schroeter**
**Dipl.-Ing K. Lehmann, Dipl.-Ing.W. Wehser**
**Dipl.-Ing. R. Holzer,**
**Dipl.-Ing.(FH) W. Gallo**
**Ludwigstrasse 26**
**D-86152 Augsburg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a waterglass precipitate recovery process for metals. More specifically, the process introduces waterglass to a process waste stream, the waterglass forms a matrix sludge with the metals in the stream, the waterglass matrix sludge formed therefrom is separated from the process stream and is then dissolved, freeing the metals dissolved in the waterglass matrix sludge for recovery. The waterglass may then be recycled for reuse and the metal may be further processed.

Waterglass processes have been used to remove the final traces of uranium from waste streams produced by ammonium diuranate (ADU) and direct conversion (IDR) processes.

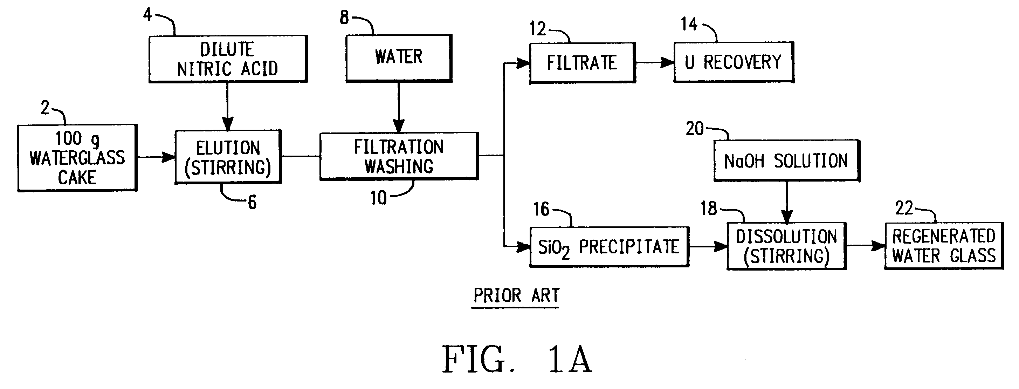

U.S. Patent 4,349,513 discloses a process for recovering uranium in a liquid which adds waterglass to the liquid which forms a precipitate which captures the uranium and treating the precipitate with acid. The leached uranium is recovered as an acid solution. The precipitate is regenerated to waterglass by treatment with an alkali metal hydroxide solution. (See Figure 1(A).)

A currently used uranium recovery waterglass process based on U.S. Patent 4,349,513 adds a 6 wt.% solution of sodium Silicate (waterglass) to the process waste which is usually about 6 wt.% ammonia, about 1 to 3 wt.% fluorine, and about 15 ppm uranium in water. The waterglass precipitates, and forms a silicate fluoride matrix sludge which captures the uranium. The silicate fluoride sludge is filtered out of the process stream and sent to a holding tank.

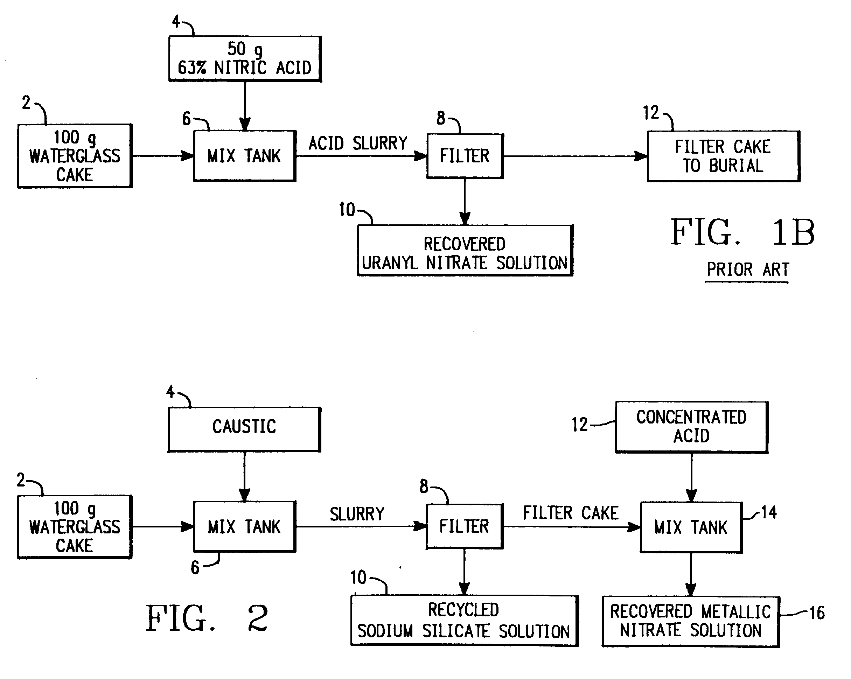

Nitric acid is added intervally to reach a pH of between about 2 and 3 to solubilize the uranium as a weak solution of uranyl nitrate. The sludge is then filtered off, solidified and disposed of in 208 liter (55 gallon) drums. The dilute uranyl nitrate solution is sent to solvent extraction where the uranium is recovered and purified. The uranium free nitrate solution is then boiled to recover nitric acid and the sludge is solidified and disposed by, for example, burial. The sludge in the uranyl nitrate solution is mainly silica which is dissolved during the nitric acid leach of the water glass sludge. (See Figure 1(B).)

There are several disadvantages to the current waterglass processes. A large amount of the metal and/or uranium that is held in the waterglass sludge is lost with the silica since it is unfeasible to perform a good wash of the silica cake. The silica cake is difficult to filter due to the very fine particle size (<5 $\mu$m) of the cake. Secondly, as nitric acid is added to the waterglass sludge, localized areas of pH of less than 2 are formed. In these localized areas, the free fluoride in the cake then combines with the nitric acid to form hydrofluoric acid which in turn attacks and dissolves some of the silica. The dissolved silica in the metal and/or uranyl nitrate solution is sent back to the solvent extraction area which causes plugging by solids during the solvent extraction. Moreover, the sludge carries fluoride ion to the nitric acid evaporator which makes the resulting process stream highly corrosive. As a result, the acid recovery apparatus must be frequently replaced.

These prior art processes provide low concentrations of uranium in the waterglass leach liquid which results in very large volumes of uranyl nitrate which need to be processed during solvent extraction. Finally, the leached silica sludge currently produced by the modified process cannot be re-dissolved in concentrated caustic due to the non-reactive nature of the precipitate. Therefore, the silica sludge must be disposed of by burial.

There is a need, therefore, for an economical, simple waterglass precipitate recovery process which produces a higher concentration of fluoride-free metals in the metal nitrate stream, and would eliminate the need for burial of the processed waste.

The present invention is a waterglass recovery process that is simpler, more economical, and more ecologically sound than the processes of the prior art. Specifically, the process introduces waterglass to a process waste stream containing metals, which forms a matrix about the metal in the stream and precipitates. The precipitate is then removed from the stream. Caustic is added to the precipitate at an elevated temperature which dissolves the waterglass matrix or sludge, freeing the metal and/or uranium in the waterglass sludge for recovery by filtration as a metal oxide or hydroxide, an ammonium salt or a sodium salt; for example, ammonium diuranate, sodium diuranate, or uranium oxide or hydroxide. The resulting metallic solids are then dissolved while in the filter cake using an acid to produce an acid solution of the metallic salt. This metallic solution may then be treated further in the solvent extraction area. The sodium silicate solution may then be recycled to a feed tank after adjustment of the concentration for reuse in the process.

It is an object of the present invention to provide a simplified waterglass recovery process for metals.

It is another object of the present invention to provide a solution of metallic nitrate that is substantially silica and fluoride-free.

It is a further object of the invention to use caustic to dissolve the waterglass in the process waste stream and separate it from a matrixed metal before dissolving the metal in acid.

It is yet another object of the present invention to provide a waterglass recovery process suitable for the recovery of uranium.

These and other objects of the present invention will be more fully understood from the following description of the invention.

Figure 1(A) illustrates a flow chart of a prior art process disclosed in U.S. Patent 4,349,513.

Figure 1(B) illustrates a flow chart of a currently used prior art process.

Figure 2 illustrates a flow chart of a presently preferred embodiment of the present invention.

The process of the present invention can be used with any process waste stream which contains metals. For convenience of description, a waste process stream containing uranium will be used as an example. However, the invention is not limited to the recovery of uranium.

The process is suitable for use with either the ADU or IDR processes, for example. Both of these processes use either $UF_6$ or $UO_2(NO_3)_2$ as feeds. The ADU process adds water to the $UF_6$ and forms $UO_2F_2$. The uranyl fluoride or nitrate solutions are then contacted with ammonium hydroxide to form ammonium diuranate. The ammonium diuranate is then filtered from the solution and processed in a kiln to $UO_2$. The filtrate contains both dissolved and particulate ADU and $UO_2F_2$.

The IDR process injects the $UF_6$ and/or the $UO_2(NO_3)_2$ into a kiln where it is reduced directly to $UO_2$. The off-gasses from this process are then scrubbed, which produces the uranium contaminated solution.

Figures 1(A) and (B) and 2 illustrate a comparison of the prior art and a presently preferred embodiment of the present invention. Figure 1(A) shows the prior art process disclosed in U.S. Patent 4,349,513. The waterglass cake or slurry 2 is treated with dilute nitric acid 4 by stirring 6 to form uranyl nitrate. After washing with water 8 and filtration 10, the uranium containing filtrate 12 is then processed further to recover the uranium 4. The $SiO_2$ precipitate 16 is then dissolved 18 in a sodium hydroxide solution 20 and then regenerated into waterglass 22. This process was found to be unworkable in practice. A modified prior art process based on U.S. Patent 4,349,513 was then implemented.

In the modified prior art process illustrated in Figure 1(b), the waterglass cake or slurry 2 is treated with nitric acid 4 to form uranyl nitrate in a mix tank 6. The nitric acid addition also converts the $NH_4F$ carried over with the cake into HF and $NH_4NO_3$. The HF then attacks the $SiO_2$ and dissolves some of the silica into the solution. The slurry is then filtered 8 to recover a large portion of the uranyl nitrate solution 10. Some attempt may be made to wash the cake. However, due to the extremely fine particle size, this washing is not very effective. The cake is then solidified with concrete and buried as a nuclear waste 12. About 12% of the inlet uranium is lost. Since this uranium is enriched and worth about \$1000 per kilogram, this represents a significant loss. In addition, the burial cost (at about 1500\$/m³ (\$40/ft³)) is also significant. Attempts to dissolve the silica in concentrated sodium hydroxide after filtering have not been successful.

In the presently preferred process of the present invention as illustrated in Figure 2, the waterglass cake 2 is first contacted with concentrated caustic 4 in a mix tank 6. Any caustic may be suitable, such as sodium hydroxide or potassium hydroxide, for example. The caustic 4 attacks the waterglass cake or silica matrix 2 and dissolves it. The silica matrix is very reactive in the waterglass precipitate stage. The metal which is contained in the waterglass cake either remains as ADU in the example of uranium or precipitates as the caustic salt of the metal, such as sodium diuranate, or uranium hydroxide. The metallic solids are then filtered out of the dissolved waterglass-based solution 8, and the dissolved waterglass solution may then be recycled for use in this process 10. Usually, the waterglass solution needs to be adjusted to a concentration of about 2 to 8 w/o $SiO_2$. The metallic solids on the filter are then washed with a concentrated acid 12 such as nitric acid in a mix tank 14 and processed further to recover the metal 16. The concentration of the metallic acid salt is about 20 times more concentrated than in the prior art processes of Figures 1(A) and 1(B).

With regard to a uranium recovery, after the ADU or IDR processes, a process waste stream is produced. The processed waste generally has about 4 to 8 wt.% ammonia, about 1 to 3 wt.% fluoride, and about 5 to 100 ppm uranium and up to 8 wt.% nitrate in water. Sodium silicate or waterglass is added to the process waste stream at a concentration preferably of about 2 to 8 wt.% $SiO_2$ at the rate of about 1 to 10 wt% of the waste stream. The waterglass precipitates matrixing the metal in the process waste stream is then removed from the stream and collected as about a 15 wt.% $SiO_2$ solid. About 25 to 50 wt.% caustic, such as sodium hydroxide, is then added to the waterglass precipitate at an elevated temperature, preferably about 40 to 70 °C and more preferably about 60 °C. The caustic such as sodium hydroxide is preferably present in a ratio of about 3 moles Na per mole of $SiO_2$. Other strong caustics such as potassium hydroxide may be used.

After addition of the caustic, the waterglass sludge dissolves, leaving the metal as a solid in suspension or a sludge. The sodium silicate solution is separated from the metal solids on a filter, in a settling tank or by centrifugation.

The sodium silicate solution may then be recycled by adjusting the concentration of the sodium silicate with concentrated (about 29 wt.% $SiO_2$) waterglass and sent to a feed tank for reuse in the waterglass process. Specifically, the concentration of the recycled sodium silicate solution should be about 2 to 8% $SiO_2$.

The resultant metallic solid which is in the form of an ammonium metal or a metal oxide or hydroxide such as ammonium diuranate, sodium diuranate or uranium dioxide or hydroxide, respectively is dissolved in the filter cake using about 20 to 68 wt.% acid and more preferably about 40 wt.% acid. Any concentrated acid may be used if desired; however, nitric acid is preferred. The resulting nitrate solution is very concentrated in metal and is substantially free of silicates. This solution is then further treated to recover the metal. In the example of uranium recovery, a solvent extraction technique well known to those skilled in the art may be used to recover the uranium.

The volume of the metallic nitrate solution is significantly less than the prior art and results in almost complete recovery of the metal from the waterglass precipitate. Because the waterglass can be recycled, there is a reduction in the amount of waterglass required for this process. Fluoride levels are also reduced, resulting in the reduced corrosion of the equipment. The process of the present invention eliminates the need for burial of the waste, thereby eliminating burial costs.

It will be appreciated that the above-described invention provides a process for metal recovery from waste streams using a waterglass precipitate recovery. ADU or IDR process wastes are particularly suitable for the removal of uranium using this process. Specifically, the addition of a caustic solution to the waterglass matrix precipitate dissolves the waterglass sludge and frees the metal in the waterglass sludge for a more simplified and cost-effective recovery. The waterglass used in this process can be recycled and the metal may be recovered.

EP 0 433 860 B1

## IDENTIFICATION OF REFERENCE NUMERALS USED IN THE DRAWINGS

| LEGEND | REF. NO. | FIGURE |
|---|---|---|
| 100 g WATERGLASS CAKE | 2 | 1A |
| 100 g WATERGLASS CAKE | 2 | 1B |
| 100 g WATERGLASS CAKE | 2 | 2 |
| DILUTE NITRIC ACID | 4 | 1A |
| 50 g 63% NITRIC ACID | 4 | 1B |
| CAUSTIC | 4 | 2 |
| ELUTION (STIRRING) | 6 | 1A |
| MIX TANK | 6 | 1B |
| MIX TANK | 6 | 2 |
| WATER | 8 | 1A |
| FILTER | 8 | 1B |
| FILTER | 8 | 2 |
| FILTRATION WASHING | 10 | 1A |
| RECOVERED URANYL NITRATE SOLUTION | 10 | 1B |
| RECYCLED SODIUM SILICATE SOLUTION | 10 | 2 |
| FILTRATE | 12 | 1A |
| FILTER CAKE TO BURIAL | 12 | 1B |
| CONCENTRATED ACID | 12 | 2 |
| U RECOVERY | 14 | 1A |
| MIX TANK | 14 | 2 |
| $SiO_2$ PRECIPITATE | 16 | 1A |
| RECOVERED METALLIC NITRATE SOLUTION | 16 | 2 |
| DISSOLUTION (STIRRING) | 18 | 1A |
| NaOH SOLUTION | 20 | 1A |
| REGENERATED WATER GLASS | 22 | 1A |

## Claims

1. A method of recovering metals including radioactive metals such as uranium from a process waste liquid containing at least 5 ppm metal and fluorides, in which method waterglass is added to said waste liquid so as to allow said waterglass to form a fluoride-containing matrix with the metal, the waterglass metal matrix is removed from said waste liquid and said matrix is treated with acid to recover the metal, characterized in that said waterglass is added to said waste liquid in a concentration of 2 to 8 weight % and at a rate of 1 to 10 wt% of the waste liquid, a 25 to 50 weight % caustic is added to the removed waterglass metal matrix to dissolve the waterglass; the waterglass solution is separated from said metal-containing matrix; acid is added to the matrix to dissolve said metal; and said dissolved metal is separated from said matrix.

2. The method of claim 1, characterized in that the caustic is added as a caustic solution.

3. The method of claims 1 or 2, characterized in that the caustic is added at a temperature of between 40°C and its boiling point.

4. The method of claim 3, characterized in that said caustic is added at a temperature of 40 to 70°C.

5. The method of any of claims 2 to 4, characterized in that said caustic is sodium hydroxide.

6. The method of claim 5, characterized in that said sodium hydroxide is added in a ratio of about 2 to 3 moles sodium hydroxide per mole of $SiO_2$ in the waterglass.

7. The method of any of claims 1 to 5, characterized in that nitric acid is added to dissolve the metal.

8. The method of claim 7, characterized in that about 20 to 68 weight % nitric acid is added to dissolve the metal.

9. The method of any of claims 1 to 8, characterized in that said process waste liquid contains about 4 to 8 weight % ammonia, about 1 to 3 weight % fluoride, about 5 to 100 ppm uranium, and up to 8 weight % nitrate in water.

10. The method of any of claims 1 to 10, characterized in that the concentration of said waterglass solution is adjusted to about 2 to 8 weight % after separating the waterglass solution from the metal containing matrix.

**Patentansprüche**

1. Verfahren zum Wiedergewinnen von Metallen einschließlich radioaktiven Metallen wie beispielsweise Uran aus einer als Prozeßabfall anfallenden Flüssigkeit, die mindestens 5 ppm Metall sowie Fluoride enthält, wobei Wasserglas zu der Abfallflüssigkeit zugegeben wird, so daß das Wasserglas mit dem Metall eine fluoridhaltige Matrix bilden kann, wobei weiter die Wasserglas-Metall-Matrix aus der Abfallflüssigkeit abgeschieden und die Matrix zur Wiedergewinnung des Metalls mit Säure behandelt wird,
dadurch gekennzeichnet, daß das Wasserglas der Abfallflüssigkeit mit einer Konzentration von 2 bis 8 Gew.-% und mit einer Rate von 1 bis 10 Gew.-% der Abfallflüssigkeit zugegeben wird, daß weiter der abgeschiedenen Wasserglas-Metall-Matrix ein Ätzmittel mit 25 bis 50 Gew.-% zugegeben wird, um das Wasserglas aufzulösen, die Wasserglaslösung sodann von der metallhaltigen Matrix abgeschieden wird, Säure zum Auflösen des Metalls zu der Matrix zugegeben wird, und das aufgelöste Material von der Matrix abgeschieden wird.

2. Verfahren nach Anspruch 1, dadurch gekennzeichnet, daß das Ätzmittel als Ätzlösung zugegeben wird.

3. Verfahren nach Anspruch 1 oder 2, dadurch gekennzeichnet, daß das Ätzmittel mit einer Temperatur zwischen 40°C und seinem Siedepunkt zugegeben wird.

4. Verfahren nach Anspruch 3, dadurch gekennzeichnet, daß das Ätzmittel bei einer Temperatur von 40 bis 70°C zugegeben wird.

5. Verfahren nach einem der Ansprüche 2 bis 4, dadurch gekennzeichnet, daß das Ätzmittel Natriumhydroxid ist.

**6.** Verfahren nach Anspruch 5, dadurch gekennzeichnet, daß das Natriumhydroxid in einem Verhältnis von etwa 2 bis 3 Mol Natriumhydroxid pro Mol $SiO_2$ in dem Wasserglas zugegeben wird.

**7.** Verfahren nach einem der Ansprüche 1 bis 5, dadurch gekennzeichnet, daß zum Auflösen des Metalls Salpetersäure zugegeben wird.

**8.** Verfahren nach Anspruch 7, dadurch gekennzeichnet, daß etwa 20 bis 68 Gew.-% Salpetersäure zum Auflösen des Metalls zugegeben wird.

**9.** Verfahren nach einem der Ansprüche 1 bis 8, dadurch gekennzeichnet, daß die Prozeßabfallflüssigkeit etwa 4 bis 8 Gew.-% Ammoniak, etwa 1 bis 3 Gew.-% Fluorid, etwa 5 bis 100 ppm Uran, und bis zu 8 Gew.-% Nitrat in Wasser enthält.

**10.** Verfahren nach einem der Ansprüche 1 bis 9, dadurch gekennzeichnet, daß die Konzentration der Wasserglaslösung nach dem Abscheiden der Wasserglaslösung von der metallhaltigen Matrix auf etwa 2 bis 8 Gew.-% eingestellt wird.

## Revendications

**1.** Procédé pour récupérer des métaux, y compris des métaux radioactifs tels que l'uranium, à partir d'un liquide résiduel de processus contenant au moins 5 ppm de métal et de fluorures, procédé dans lequel on ajoute du verte soluble audit liquide résiduel de manière à permettre audit verte soluble de former avec le métal une matrice contenant du fluorure, on extrait du liquide résiduel la matrice contenant du fluorure et on traite ladite matrice avec un acide pour récupérer le métal, caractérisé en ce que l'on ajoute ledit verre soluble audit liquide résiduel en une concentration de 2 à 8% en poids et suivant un pourcentage de 1 à 10% en poids de liquide résiduel, on ajoute 25 à 50% en poids d'un produit caustique à la matrice métal-verte soluble extraite pour dissoudre le verte soluble; on sépare la solution de verte soluble de ladite matrice contenant du métal; on ajoute un acide à la matrice pour dissoudre ledit métal; et on sépare de ladite matrice ledit métal dissous.

**2.** Procédé selon la revendication 1, caractérisé en ce que l'on ajoute le produit caustique sous forme d'une solution caustique.

**3.** Procédé selon la revendication 1 ou 2, caractérisé en ce que l'on ajoute le produit caustique à une température comprise entre 40°C et son point d'ébullition.

**4.** Procédé selon la revendication 3, caractérisé en ce que l'on ajoute ledit produit caustique à une température comprise entre 40 et 70°C.

**5.** Procédé selon l'une quelconque des revendications 2 à 4, caractérisé en ce que ledit produit caustique est de la soude caustique.

**6.** Procédé selon la revendication 5, caractérisé en ce que l'on ajoute ladite soude caustique suivant un rapport d'environ 2 à 3 moles de soude caustique par mole de $SiO_2$ dans le verte soluble.

**7.** Procédé selon l'une quelconque des revendications 1 à 5, caractérisé en ce que on ajoute de l'acide nitrique pour dissoudre le métal.

**8.** Procédé selon la revendication 7, caractérisé en ce que l'on ajoute environ 20 à 68% d'acide nitrique pour dissoudre le métal;

**9.** Procédé selon l'une quelconque des revendications 1 à 8, caractérisé en ce que ledit liquide résiduel de processus contient environ 4 à 8 % en poids d'ammoniaque, environ 1 à 3% en poids de fluorure, environ 5 à 100 ppm d'uranium, et jusqu'à 8% en poids de nitrate dans de l'eau.

**10.** Procédé selon l'une quelconque des revendications 1 à 9, caractérisé en ce que l'on ajuste la concentration de ladite solution de verte soluble jusqu'à ce qu'elle soit égale à environ 2 à 8% en poids après avoir séparé la solution de verte soluble de la matrice contenant le métal.

EP 0 433 860 B1

FIG. 1A

PRIOR ART

4

50 g
63% NITRIC ACID

2

100 g
WATERGLASS
CAKE

6

MIX TANK

ACID SLURRY

8

FILTER

12

FILTER CAKE
TO BURIAL

10

RECOVERED
URANYL NITRATE SOLUTION

FIG. 1B

PRIOR ART

4

CAUSTIC

12

CONCENTRATED
ACID

2

100 g
WATERGLASS
CAKE

6

MIX TANK

SLURRY

8

FILTER

FILTER CAKE

14

MIX TANK

10

RECYCLED
SODIUM SILICATE SOLUTION

16

RECOVERED METALLIC
NITRATE SOLUTION

FIG. 2